# FASCICULE DE BREVET EUROPEEN

(11) **EP 1 801 676 B1**
(45) Date de publication et mention de la délivrance du brevet: **04.03.2009**
(21) Numéro de dépôt: 06292056.6
(22) Date de dépôt: 26.12.2006
(51) Int. Cl.: G05B 19/042

(54) **Disositif de commande électronique d'un appareil électrique domestique**
Vorrichtung zur elektronischen Steuerung eines elektrischen Haushaltsgeräts
Device for electronic control of a household electrical appliance

(30) Priorité: 26.12.2005 FR 0513318
(43) Date de publication de la demande: 27.06.2007
(73) Titulaire: FAGORBRANDT SAS, 92500 Rueil Malmaison (FR)
(72) Inventeur: Chalus, Stéphane, 45000 Orleans (FR); Oudart, Pascal, 45240 La Ferte Saint Aubin (FR); Beaumann, Olivier, 45240 La Ferte Saint Aubin (FR)
(74) Mandataire: Stankoff, Hélène

(56) Documents cités:
- FR-A- 2 561 413
- US-A- 4 380 698
- US-A- 5 786 996

## Description

La présente invention concerne un dispositif de commande électronique d'un appareil électrique domestique.

De manière générale, la présente invention s'applique à la gestion de la commande électronique, et plus particulièrement à la commande des dispositifs électroniques de sécurité d'un appareil électrique domestique, par exemple un appareil électroménager.

On connaît ainsi un appareil électrique domestique dans lequel des organes de fonctionnement, tel que par exemple des résistances de chauffage dans un four de cuisson, sont commandés par un microcontrôleur de fonctionnement.

En pratique, un microcontrôleur agit via une commande électronique sur un actionneur électronique, du type d'un interrupteur électronique, alimentant un relais dont la bobine permet d'ouvrir ou fermer un contact d'alimentation électrique de l'organe de fonctionnement.

Parallèlement à ce fonctionnement normal de l'appareil électrique domestique, le microcontrôleur de fonctionnement comporte généralement une fonction sécuritaire permettant de commander électroniquement des organes de sécurité.

A titre d'exemple, le microcontrôleur de fonctionnement est adapté à commander l'ouverture d'un relais alimentant une résistance chauffante si la température dans la cavité excède une valeur limite fixée par des normes de sécurité.

Par ailleurs, le microcontrôleur de fonctionnement peut commander le fonctionnement d'un verrou de porte permettant, notamment lors d'un nettoyage par pyrolyse d'une enceinte de cuisson, de maintenir fermée et verrouillée une porte pendant un cycle de pyrolyse.

Le document US 5 786 996 décrit un circuit comportant deux microprocesseurs.

Un premier microprocesseur fonctionne comme maître et un second comme esclave. Le maître contrôle une interface entre un utilisateur et un appareil électrique comportant un circuit de contrôle et l'esclave contrôle les opérations de l'appareil électrique et surveille des informations concernant l'état de l'appareil électrique.

La présente invention a pour but d'améliorer un dispositif de commande électronique d'un appareil électrique domestique en vue notamment de la simplification de la conception et de la qualification des différentes fonctions du dispositif de commande électronique.

A cet effet, la présente invention vise un dispositif de commande électronique d'un appareil électrique domestique comprenant des organes de fonctionnement commandés par un microcontrôleur de fonctionnement et au moins un microcontrôleur de sécurité, indépendant dudit microcontrôleur de fonctionnement, adapté à commander des organes de sécurité.

Selon l'invention, le microcontrôleur de fonctionnement est adapté à adresser au microcontrôleur de sécurité via une liaison de communication une commande de mise en sécurité d'un organe de sécurité.

Ainsi, en découplant l'architecture du dispositif de commande, et en séparant ainsi un microcontrôleur de fonctionnement exclusivement dédié à la commande des organes de fonctionnement de l'appareil, et un microcontrôleur de sécurité exclusivement dédié à la commande d'organes de sécurité, il est possible d'obtenir une indépendance de la fonction sécuritaire et de la commande fonctionnelle de l'appareil électrique domestique.

Cette indépendance permet de simplifier la conception du dispositif de commande et des fonctions mises en oeuvre dans l'appareil. Par ailleurs, la qualification des logiciels de sécurité et des logiciels de fonctionnement peut être réalisée indépendamment.

Ainsi, en cas d'évolution logiciel du microcontrôleur de fonctionnement de l'appareil, il n'est pas nécessaire d'obtenir une nouvelle qualification du logiciel du microcontrôleur de sécurité.

Le microcontrôleur de sécurité peut en outre faire l'objet d'une standardisation des fonctions de sécurité indépendamment des organes de fonctionnement intervenant dans l'appareil électrique domestique.

Grâce à la liaison de communication, un organe de sécurité peut être commandé par le microcontrôleur de fonctionnement indépendamment des contraintes de sécurité imposées par le microcontrôleur de sécurité.

Selon une caractéristique de l'invention, des traitements logiciels de sécurité choisis parmi au moins des tests d'intégrité de données, des tests de cohérence de données ou des tests de cohérence des base de temps, sont mis en oeuvre uniquement dans ledit microcontrôleur de sécurité.

Ainsi, les traitements et les mécanismes de sécurité logiciels, qui doivent nécessairement être mis en oeuvre pour valider la commande électronique des organes de sécurité, sont limités au microcontrôleur de sécurité.

Ainsi, le microcontrôleur de fonctionnement peut utiliser l'ensemble de ses ressources de calcul pour la commande des organes de fonctionnement de telle sorte que les temps d'exécution des traitements commandés par le microcontrôleur de fonctionnement sont plus rapides à ressource de calcul égale en comparaison d'un microcontrôleur mettant en oeuvre à la fois des commandes de fonctionnement et de sécurité.

Selon une autre caractéristique préférée de l'invention, les organes de sécurité comprennent des relais électroniques alimentés par des actionneurs électroniques commandés par le microcontrôleur de sécurité.

Cette utilisation de dispositifs électroniques de sécurité permet de réaliser des gains de coût par rapport à des solutions sécuritaires hybrides, associant à la fois des dispositifs électroniques ou des dispositifs mécaniques de sécurité du type thermostat de sécurité Klixon.

La présente invention concerne également un appareil électroménager domestique incorporant un dispositif de commande électronique selon l'invention.

Cet appareil électroménager domestique présente des caractéristiques et avantages analogues à ceux décrits précédemment en relation avec le dispositif de commande électronique.

D'autres particularités et avantages de l'invention apparaîtront encore dans la description ci-après.

Aux dessins annexés, donnés à titre d'exemples non limitatifs:
- la figure 1 est un schéma bloc illustrant l'architecture électronique d'un dispositif de commande électronique conforme à l'invention ;
- la figure 2 est un schéma électronique illustrant le dispositif de commande électronique conforme à un mode de réalisation de l'invention ; et
- la figure 3 est un exemple d'un schéma électrique illustrant la commande électrique d'organes de fonctionnement et d'organes de sécurité d'un appareil électrique domestique incorporant un dispositif de commande électronique conforme à l'invention.

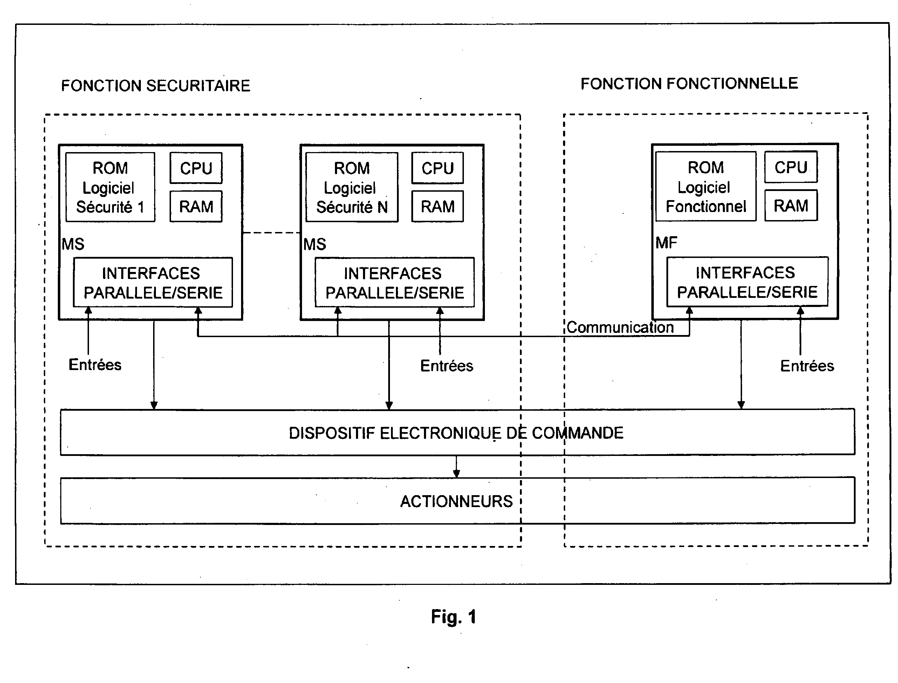

On va décrire tout d'abord en référence à la figure 1 le principe général du dispositif commande électronique conforme à l'invention.

Le dispositif de commande électronique présente une architecture électronique permettant d'intégrer deux fonctions, l'une pour la gestion d'organes de fonctionnement d'un appareil et l'autre exclusivement dédié à la gestion d'organes de sécurité, notamment en cas de défaillance de l'appareil électrique.

Le dispositif de commande électronique comprend un microcontrôleur de fonctionnement MF permettant de gérer différents organes de fonctionnement.

Ce microcontrôleur de fonctionnement MF est constitué d'un micro processeur CPU, d'une mémoire morte (ROM ou Read Only Memory) et d'une mémoire vive (RAM ou Random Access Memory).

Le programme chargé en mémoire morte, correspondant au logiciel fonctionnel de l'appareil, est chargé dans le micro processeur, la mémoire vive étant adaptée à mémoriser temporairement les variables modifiées durant l'exécution du programme.

Ce microcontrôleur de fonctionnement MF comprend également une interface série ou parallèle permettant l'entrée de données et la sortie de signaux de commande.

En pratique, le microcontrôleur de fonctionnement MF délivre des signaux numériques agissant sur un dispositif électronique de commande permettant de commander des actionneurs électroniques tels que des interrupteurs électroniques alimentant des organes de fonctionnement.

Indépendamment de ce microcontrôleur de fonctionnement MF, le dispositif de commande électronique comporte un ou plusieurs microcontrôleurs de sécurité MS. Chaque microcontrôleur de sécurité MS comporte également un micro processeur CPU, une mémoire morte ROM et une mémoire vive RAM permettant de mémoriser les variables modifiées lors de l'exécution du programme.

La mémoire morte ROM est adaptée à mémoriser un programme constituant un logiciel de sécurité de l'appareil électronique.

Chaque microcontrôleur de sécurité MS comporte en outre une interface parallèle ou série permettant de recevoir des signaux d'entrée analogiques et/ou numériques et de transmettre des valeurs de sortie à destination d'un dispositif électronique de commande commandant électroniquement des actionneurs alimentant des organes de sécurité.

Par ailleurs, une liaison de communication est prévue entre les microcontrôleurs de sécurité MS et le microcontrôleur fonctionnel MF, par l'intermédiaire des interfaces séries ou parallèles de chaque microcontrôleur.

En particulier, le microcontrôleur de sécurité MS peut transmettre au microcontrôleur de fonctionnement MF via la liaison de communication des informations sur l'état des valeurs d'entrée et/ou de sortie du microcontrôleur de sécurité MS, ces informations étant adaptées à constituer un code d'erreur représentatif d'un disfonctionnement d'un ou des organes de fonctionnement.

Il est ainsi possible d'informer le microcontrôleur de fonctionnement d'événements liés à la sécurité en vue notamment d'adresser un code d'erreur qui peut être affiché sur des moyens d'affichage d'un appareil électrique intégrant le dispositif de commande, pour notamment faciliter le diagnostic des pannes par un utilisateur.

Par ailleurs, l'échange d'informations peut également être réalisé du microcontrôleur de fonctionnement MF à destination d'un ou des microcontrôleurs de sécurité MS.

En particulier, le microcontrôleur de fonctionnement est adapté à adresser une commande de mise en sécurité anticipée d'un organe de sécurité à un microcontrôleur de sécurité.

Par ailleurs, il est possible au microcontrôleur de fonctionnement MF d'adresser une commande de suspension de la commande électronique des actionneurs alimentant les organes de sécurité afin notamment d'économiser de l'énergie.

Cette mise en veille du microcontrôleur de sécurité permet notamment d'économiser de l'énergie lorsque l'appareil électrique est inactif, en évitant de commander électroniquement et d'alimenter des actionneurs électroniques lorsque les organes de fonctionnement sont inactifs.

En pratique, les microcontrôleurs MF, MS sont intégrés dans une carte électronique de commande équipant un appareil électrique.

Plus particulièrement, les microcontrôleurs de sécurité MS et de fonctionnement MF peuvent être intégrés sur une même masse d'un matériau semi conducteur de telle sorte que le circuit intégré électronique est monolithique.

Bien entendu, les microcontrôleurs peuvent être scindés et intégrés sur des masses de matériau semi conducteur séparées de telle sorte que des circuits intégrés séparés peuvent être incorporés dans la carte de commande électronique.

Grâce au découplage des microcontrôleurs de sécurité MS et de microcontrôleurs de fonctionnement MF, il est possible de modifier le logiciel fonctionnel de commande de l'appareil sans intervenir sur le logiciel de sécurité.

Par ailleurs, seuls les microcontrôleurs de sécurité MS sont adaptés à implémenter des traitements de sécurité permettant de vérifier l'intégrité des données stockées en mémoire morte ROM ou en mémoire vive RAM ou de vérifier la cohérence des valeurs entrées et des bases de temps utilisées.

Ces tests d'intégrité ou de cohérence n'étant pas implémentés dans le logiciel fonctionnel du microcontrôleur de fonctionnement, la charge de calcul du micro processeur CPU du microcontrôleur de fonctionnement MF peut être allégée significativement. Le microcontrôleur de fonctionnement MF est ainsi entièrement dédié à la commande des organes de fonctionnement de l'appareil électrique.

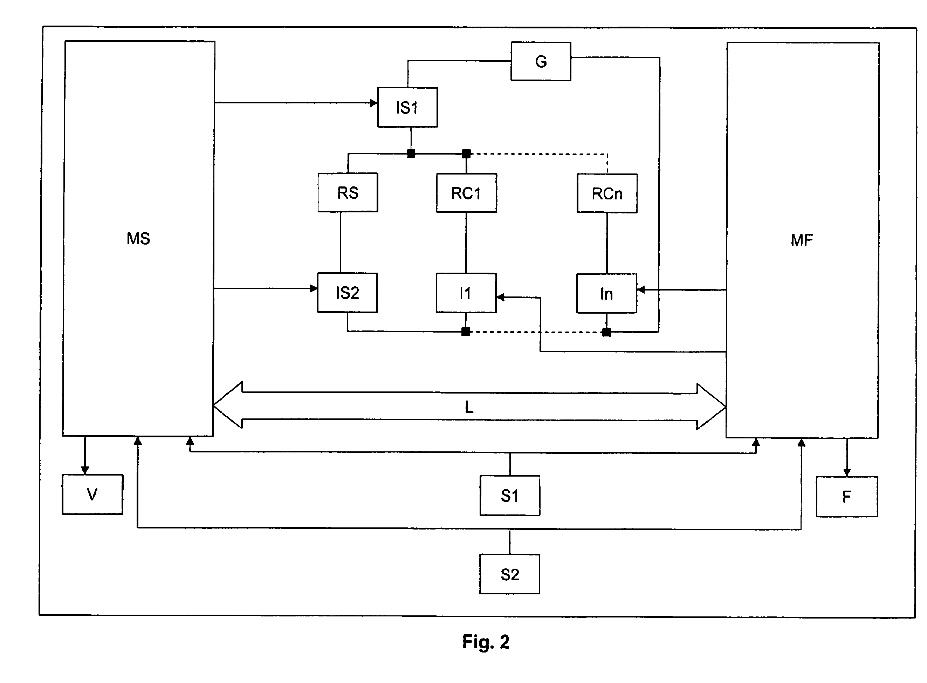

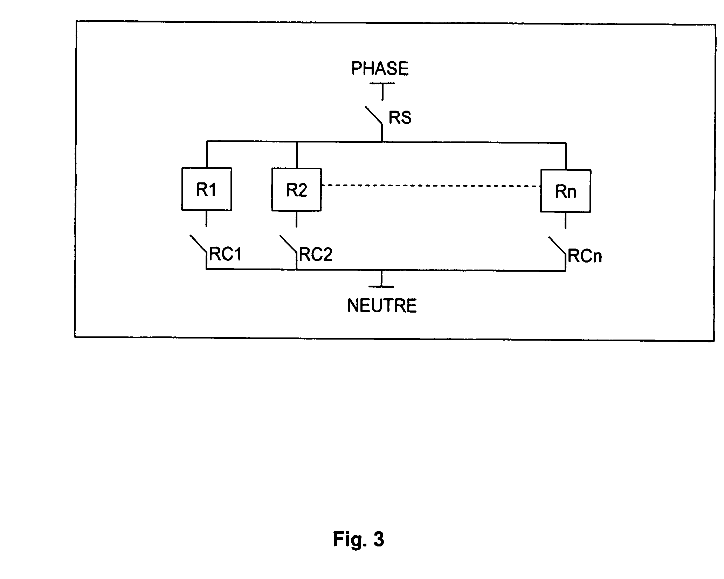

On va décrire à présent en référence aux figures 2 et 3 un exemple de dispositif de commande électronique conforme à l'invention appliqué à un appareil électroménager du type d'un four électrique à nettoyage pyrolytique.

Comme illustré à la figure 3, un four à pyrolyse comporte des résistances chauffantes R1, ..., Rn commandées par des relais de chauffe RC1, ..., RCn.

En pratique, le nombre de résistances peut être égal à deux, n étant égal à 2.

Les résistances électriques ainsi commandées par les relais de chauffe RC1, ..., RCn constituent des organes de fonctionnement du four. D'autres organes de fonctionnement peuvent être mis en oeuvre, tels qu'un ventilateur F permettant d'assurer la circulation de l'air dans la cavité ou d'un air de refroidissement autour d'une enceinte de cuisson.

Parallèlement, des organes de sécurité sont prévus. En particulier, un verrou V est adapté à verrouiller la porte lors du fonctionnement pyrolytique.

Par ailleurs, un relais de sécurité RS est monté en série avec les relais de chauffe afin notamment d'arrêter l'alimentation électrique des résistances chauffantes en cas de défaillance.

Par ailleurs, des sondes de température sont prévues.

En particulier, une sonde de température S1 est prévue dans l'enceinte du four et permet de surveiller la température dans l'enceinte de cuisson.

En particulier, la valeur donnée par cette sonde de température S1 est adressée au microcontrôleur de fonctionnement MF afin de mettre en oeuvre un logiciel de cuisson classique à partir d'une régulation de température dans l'enceinte de cuisson autour d'une valeur de consigne.

Par ailleurs, la valeur de température mesurée dans l'enceinte de cuisson est également adressée par la sonde S1 au microcontrôleur de sécurité MS pour permettre la coupure des éléments chauffant en cas de dépassement d'une valeur seuil de sécurité, ou encore de déclencher le verrouillage du verrou V de la porte en cas de dépassement d'une valeur seuil de température lors de la mise en route d'un cycle de nettoyage par pyrolyse.

Une sonde de température S2 est également prévue sur une carte électronique de commande afin de surveiller l'échauffement de la carte électronique au niveau du microcontrôleur de sécurité MS ou encore de modifier par exemple le contraste d'un afficheur en fonction de la température mesurée par la sonde S2 de la carte électronique adressée au microcontrôleur de fonctionnement MF.

Comme bien illustré à la figure 2, les résistances chauffantes R1, ..., Rn sont alimentées par l'intermédiaire des relais de chauffe RC1, RC2, ..., RCn et également par l'intermédiaire d'un contact d'un relais de sécurité RS, la commande des relais de chauffe RC1, RC2, ..., RCn étant effectuée par le microcontrôleur de fonctionnement MF grâce aux interrupteurs électroniques I1, ..., In.

De même, la commande du relais de sécurité RS est réalisée par le microcontrôleur de sécurité MS par les interrupteurs électroniques IS1 et IS2.

Comme illustré à la figure 2, un premier interrupteur IS1, monté en aval du générateur G, permet de commander l'alimentation générale du circuit électronique d'alimentation des résistances.

Le second interrupteur IS2 permet d'alimenter le relais de sécurité RS.

En pratique, les interrupteurs électroniques IS1, IS2, I1, ..., In sont adaptés, lorsqu'ils sont en position fermée, à alimenter en courant une bobine des relais de chauffe RC1, ..., RCn ou du relais de sécurité RS afin de fermer le contacteur d'alimentation de chaque relais et permettre le fonctionnement des résistances électriques R1, ..., Rn.

Le microcontrôleur de fonctionnement MF est adapté à gérer des fonctions de régulation mises en oeuvre de façon classique dans un four de cuisson notamment à partir de la température de l'enceinte de cuisson adressée par la sonde S1.

Il commande ainsi les états ON/OFF des relais de chauffe RC1, ..., RCn et éventuellement d'un ventilateur en fonction des températures lues et mesurées par les sondes d'enceinte de cuisson S1 et de carte électronique S2.

En outre, grâce à la liaison de communication L entre les microcontrôleurs de fonctionnement MF et les microcontrôleurs de sécurité MS, il est possible de mettre en oeuvre une stratégie de commande du relais de sécurité RS permettant d'augmenter sa durée de vie.

En pratique, la commande d'un changement d'état du relais de sécurité RS n'est réalisée que lorsque que le courant qui le traverse est nul.

Ainsi, en référence à la figure 3, pour l'alimentation des éléments chauffants constitués par les résistances électriques R1, ..., Rn, une commande du relais de sécurité RS en position ON est envoyée par le microcontrôleur de fonctionnement MF au microcontrôleur de sécurité MS via la liaison de communication L.

Le microcontrôleur de sécurité ferme alors le relais de sécurité RS, les relais de chauffe RC1, ..., RCn étant ouverts de telle sorte que le courant traversant le relais de sécurité RS est nul pendant la fermeture du relais de sécurité RS.

Le microcontrôleur de sécurité MS adresse ensuite une réponse de fermeture du relais de sécurité RS via la liaison de communication L au microcontrôleur de fonctionnement MF.

A la réception par le microcontrôleur de fonctionnement MS de cette information de fermeture du relais de sécurité RS, le microcontrôleur de fonctionnement MF commande la fermeture des relais de chauffe RC1, ..., RCn de telle sorte que le courant s'établit et que les résistances électriques R1, ..., Rn fonctionnent.

La régulation de la température dans l'enceinte de cuisson autour de la valeur d'une température de consigne (entre 100°C et 250°C) peut être mise en oeuvre par mise en marche et arrêt alternés des résistances chauffantes.

Lors de la mise hors tension des éléments chauffants R1, ..., Rn, le microcontrôleur de fonctionnement MF commande l'ouverture des relais de chauffe RC1, ..., RCn.

Le courant s'annule alors dans le circuit.

Le microcontrôleur de fonctionnement MF adresse alors au microcontrôleur de sécurité MS une commande du relais de sécurité en position OFF par l'intermédiaire de la liaison de communication L.

Le microcontrôleur de sécurité MS commande alors l'ouverture du relais de sécurité RS.

Ainsi, l'ouverture du relais de sécurité RS est réalisée également lorsque le courant est nul dans le circuit.

Cette disposition permet d'éviter l'usure ou le collage des contacts au niveau du relais de sécurité RS dès lors que son changement d'état (ON ou OFF) est réalisé lorsque le courant le traversant est nul.

La durée de vie du relais de sécurité RS peut ainsi être augmentée.

Par ailleurs, comme expliqué précédemment, le microcontrôleur de fonctionnement MF peut adresser au microcontrôleur de sécurité MS une commande visant à obtenir le verrouillage du verrou V, notamment lorsqu'un cycle de pyrolyse est déclenché par un utilisateur.

Un verrouillage anticipé du verrou V peut être obtenu lorsque le microcontrôleur de fonctionnement MF adresse une demande de mise en sécurité anticipée au moyen de la liaison de communication L.

Ainsi, le microcontrôleur de fonctionnement MF génère une commande de verrouillage anticipé, le microcontrôleur de sécurité MS n'assurant le verrouillage qu'à partir d'un seuil critique de température dans l'enceinte de cuisson. Ce seuil critique peut être égal par exemple à 350°C.

Ce verrouillage anticipé, ou mise en sécurité de la porte, peut intervenir en début d'un cycle de fonctionnement, tel qu'un cycle de pyrolyse ou un cycle de cuisson particulier.

Il est commandé par le microcontrôleur de fonctionnement et n'est pas conditionné à la valeur détectée par un capteur de température.

Bien entendu, le microcontrôleur de sécurité MS peut à tout moment commander le verrouillage de la porte si le seuil critique de température est dépassé, quand bien même le microcontrôleur de fonctionnement ne commanderait pas le verrouillage de porte, en cas de défaillance par exemple du microcontrôleur de fonctionnement MF ou de la liaison de communication L.

Par ailleurs, lorsque le four est éteint, le microcontrôleur de fonctionnement MF peut adresser une information de mise en veille au microcontrôleur de sécurité MS de manière à commander les interrupteurs IS1, IS2 en position OFF afin d'économiser de l'énergie et d'éviter l'alimentation de la bobine du relais de sécurité RS.

Simultanément, en fonctionnement, le microcontrôleur de sécurité MS commande électroniquement les interrupteurs IS1, IS2 qui peuvent ainsi prendre une position ON ou une position OFF, permettant en position ON d'alimenter la bobine du relais de sécurité RS et de fermer ainsi le circuit électrique d'alimentation des résistances R1, ..., Rn.

En pratique, les interrupteurs lS1 et lS2 sont en position ON, autorisant ainsi l'alimentation des relais de chauffe RC1, ..., RCn, si et seulement si les conditions de cohérence des valeurs adressées par les sondes S1, S2, et des données mémorisées en mémoire ROM ou RAM, sont remplies. Lors d'un cycle pyrolytique, les interrupteurs IS1 et IS2 sont en position ON uniquement si le verrou V de porte est effectivement verrouillé.

A contrario, le microcontrôleur de sécurité commande la mise en état OFF des interrupteurs IS1, IS2 dès que le logiciel de sécurité détecte par exemple une défaillance au niveau du système de verrouillage, ou encore une incohérence entre les températures mesurées par la sonde de l'enceinte S1 ou la sonde de carte électronique S2.

Il en est de même lorsque le microcontrôleur de fonctionnement demande une mise en état de veille de l'appareil afin d'économiser de l'énergie ou bien encore si le logiciel de sécurité détecte une erreur dans l'intégrité des données stockées en mémoire morte ou mémoire vive.

Par ailleurs, le microcontrôleur de sécurité MS agit sur le système de verrouillage V pour verrouiller la porte dès que la température lue par la sonde de température de l'enceinte S1 atteint une valeur prédéfinie (par exemple 350°C).

Parallèlement, le déverrouillage de la porte peut également être autorisé uniquement si la température dans l'enceinte de cuisson est en dessous d'une valeur prédéterminée.

Enfin, le microcontrôleur de sécurité MS peut adresser des informations via la liaison de communication L au microcontrôleur de fonctionnement MF notamment en vue d'identifier des organes défectueux par un code d'erreur.

Par ailleurs, le microcontrôleur de fonctionnement MF peut exercer une surveillance à l'égard du microcontrôleur de sécurité MS.

Ainsi, le microcontrôleur de fonctionnement MF est adapté à détecter un défaut de transmission d'information par le microcontrôleur de sécurité MS via la liaison de communication L. Cette mauvaise transmission d'information signifie que le microcontrôleur de sécurité est bloqué, par défaut logiciel ou matériel de ce microcontrôleur de sécurité MS.

Dans ce cas, le microcontrôleur de sécurité MS est inapte à générer une commande appropriée pour mettre en sécurité de fonctionnement les différents organes de l'appareil.

En réponse à la détection d'une défaillance dans la transmission d'information via la liaison de communication L, le microcontrôleur de fonctionnement MF est adapté à commander une mise en sécurité des organes de fonctionnement de l'appareil, et en particulier des résistances électriques R1, ..., Rn. En pratique, la mise en sécurité des résistances électriques R1, ..., Rn est réalisée par la mise en état OFF des interrupteurs électroniques I1... In.

Bien entendu, la présente invention n'est pas limitée à l'exemple de réalisation décrit précédemment.

En particulier, le dispositif électronique de commande peut être incorporé dans tous types d'appareil électroménager domestique, tel qu'une plaque de cuisson à commande électronique, un appareil de lavage ou de séchage de linge, ou encore une hotte de cuisson.

Le dispositif de commande électronique peut en outre comporter plusieurs relais de sécurité.

## Revendications

1. Dispositif de commande électronique d'un appareil électrique domestique comprenant des organes de fonctionnement (R1, ..., Rn) commandés par un microcontrôleur de fonctionnement (MF) et au moins un microcontrôleur de sécurité (MS), indépendant dudit microcontrôleur de fonctionnement (MF), adapté à commander au moins un organe de sécurité (RS, V), **caractérisé en ce que** ledit microcontrôleur de fonctionnement (MF) est adapté à adresser au microcontrôleur de sécurité (MS) via une liaison de communication (L) une commande de mise en sécurité d'un organe de sécurité (RS, V).

2. Dispositif de commande électronique conforme à la revendication 1, **caractérisé en ce que** les organes de sécurité comprennent des relais électroniques (RS) alimentés par des actionneurs électroniques (IS1, IS2) commandés par le microcontrôleur de sécurité (MS).

3. Dispositif de commande électronique conforme à l'une des revendications 1 ou 2, **caractérisé en ce que** des traitements logiciels de sécurité choisis parmi au moins des tests d'intégrité de données, des tests de cohérence de données ou des tests de cohérence des base de temps, sont mis en oeuvre uniquement dans ledit microcontrôleur de sécurité (MS).

4. Dispositif de commande électronique conforme à l'une des revendications 1 à 3, **caractérisé en ce que** le microcontrôleur de fonctionnement (MF) est adapté à détecter un défaut de transmission d'information par le microcontrôleur de sécurité (MS) via la liaison de communication (L) et à commander en réponse une mise en sécurité des organes de fonctionnement (R1, ..., Rn) dudit appareil électrique domestique.

5. Dispositif de commande électronique conforme à l'une des revendications 1 à 4, **caractérisé en ce que** ledit microcontrôleur de sécurité (MS) est adapté à transmettre audit microcontrôleur de fonctionnement (MF) via ladite liaison de communication (L) des informations sur l'état des valeurs et/ou de sortie dudit microcontrôleur de sécurité (MS), lesdites informations étant adaptées à constituer un code d'erreur représentatif d'un disfonctionnement d'un ou des organes de fonctionnement.

6. Dispositif de commande électronique conforme à l'une des revendications 1 à 5, **caractérisé en ce que** le microcontrôleur de fonctionnement (MF) est adapté à adresser au microcontrôleur de sécurité (MS) via la liaison de communication (L) une commande de suspension de la commande électronique d'un ou des actionneurs électroniques (IS1, IS2) alimentant un ou des organes de sécurité (RS, V).

7. Dispositif de commande électronique conforme à l'une des revendications 1 à 6, **caractérisé en ce que** le microcontrôleur de fonctionnement (MF) est adapté à adresser au microcontrôleur de sécurité (MS) via la liaison de communication (L) une commande de verrouillage d'un verrou de l'appareil électrique domestique en début d'un cycle de fonctionnement.

8. Dispositif de commande électronique conforme à l'une des revendications 1 à 7, **caractérisé en ce que** le microcontrôleur de fonctionnement (MF) est adapté à adresser au microcontrôleur de sécurité (MS) via la liaison de communication (L) une commande de changement d'état d'un relais de sécurité (RS) lorsque le courant circulant dans ledit relais de sécurité est nul.

9. Appareil électroménager domestique, **caractérisé en qu'**il comprend un dispositif de commande électronique conforme à l'une des revendications 1 à 8.

## Claims

1. Device for the electronic control of a domestic electrical appliance comprising operating components (R1, ..., Rn) controlled by an operating microcontroller (MF) and at least one safety microcontroller (MS) independent of the said operating microcontroller (MF), adapted to control at least one safety component (RS, V), **characterised in that** the said operating microcontroller (MF) is adapted to send to the safety microcontroller (MS), via a communication link (L), a command to put a safety component (RS, V) in a safe state.

2. Electronic control device according to claim 1, **characterised in that** the safety components comprise electronic relays (RS) supplied by electronic actuators (IS1, IS2) controlled by the safety microcontroller (MS).

3. Electronic control device according to one of claims 1 or 2, **characterised in that** safety software processing operations chosen from at least data integrity tests, data consistency tests or time base consistency tests are implemented solely in the said safety microcontroller (MS).

4. Electronic control device according to one of claims 1 to 3, **characterised in that** the operating microcontroller (MF) is adapted to detect a lack of information transmission by the safety microcontroller (MS) via the communication link (L) and to order in response that the operating components (R1, ..., Rn) of the said domestic electrical appliance be put in a safe state.

5. Electronic control device according to one of claims 1 to 4, **characterised in that** the said safety microcontroller (MS) is adapted to transmit to the said operating microcontroller (MF), via the said communication link (L), information on the state of the values and/or information output from the said safety microcontroller (MS), the said information being adapted to constitute an error code representing a malfunctioning of one or more of the operating components.

6. Electronic control device according to one of claims 1 to 5, **characterised in that** the operating microcontroller (MF) is adapted to send to the safety microcontroller (MS), via the communication link (L), a command to suspend the electronic control of one or more of the electronic actuators (IS1, IS2) supplying one or more of the safety components (RS, V).

7. Electronic control device according to one of claims 1 to 6, **characterised in that** the operating microcontroller (MF) is adapted to send to the safety microcontroller (MS), via the communication link (L), a command to lock a lock of the domestic electrical appliance at the start of an operating cycle.

8. Electronic control device according to one of claims 1 to 7, **characterised in that** the operating microcontroller (MF) is adapted to send to the safety microcontroller (MS), via the communication link (L), a command to change the state of a safety relay (RS) when the current flowing in the said safety relay is zero.

9. Domestic electrical appliance, **characterised in that** it comprises an electronic control device according to one of claims 1 to 8.

## Patentansprüche

1. Elektronische Steuerungsvorrichtung eines elektrischen Haushaltsgeräts, mit Betriebsorganen (R1, ..., Rn), die von einer Betriebsmikrosteuereinheit (MF) gesteuert sind, und mindestens einer Sicherheitsmikrosteuereinheit (MS), die von der Betriebsmikrosteuereinheit (MF) unabhängig und dazu geeignet ist, mindestens ein Sicherheitsorgan (RS, V) zu steuern, **dadurch gekennzeichnet, dass** die Betriebsmikrosteuereinheit (MF) dazu geeignet ist, der Sicherheitsmikrosteuereinheit (MS) über eine Kommunikationsverbindung (L) einen Befehl zum Sichern eines Sicherheitsorgans (RS, V) zu senden.

2. Elektronische Steuerungsvorrichtung nach Anspruch 1, **dadurch gekennzeichnet, dass** die Sicherheitsorgane elektronische Relais (RS) aufweisen, die von elektronischen Schaltern (IS1, IS2) versorgt sind, die von der Sicherheitsmikrosteuereinheit (MS) gesteuert sind.

3. Elektronische Steuerungsvorrichtung nach einem der Ansprüche 1 oder 2, **dadurch gekennzeichnet, dass** Sicherheits-Softwarebehandlungen, die unter mindestens Tests der Datenintegrität, der Daten- oder Zeitbasiskohärenz ausgewählt sind, lediglich in der Sicherheitsmikrosteuereinheit (MS) durchgeführt sind.

4. Elektronische Steuerungsvorrichtung nach einem der Ansprüche 1 bis 3, **dadurch gekennzeichnet, dass** die Betriebsmikrosteuereinheit (MF) dazu geeignet ist, einen Fehler in der Übertragung der Information durch die Sicherheitsmikrosteuereinheit (MS) über die Kommunikationsverbindung (L) zu ermitteln und als Reaktion darauf eine Sicherung der Betriebsorgane (R1, ..., Rn) des elektrischen Haushaltsgeräts zu steuern.

5. Elektronische Steuerungsvorrichtung nach einem der Ansprüche 1 bis 4, **dadurch gekennzeichnet, dass** die Sicherheitsmikrosteuereinheit (MS) dazu geeignet ist, der Betriebsmikrosteuereinheit (MF) über die Kommunikationsverbindung (L) Informationen über den Zustand der Eingangs- und/oder Ausgangswerte der Sicherheitsmikrosteuereinheit (MS) zu übertragen, wobei die Informationen dazu geeignet sind, einen Fehlercode zu bilden, der für eine Funktionsstörung eines Betriebsorgans oder der Betriebsorgane repräsentativ ist.

6. Elektronische Steuerungsvorrichtung nach einem der Ansprüche 1 bis 5, **dadurch gekennzeichnet, dass** die Betriebsmikrosteuereinheit (MF) dazu geeignet ist, der Sicherheitsmikrosteuereinheit (MS) über die Kommunikationsverbindung (L) einen Befehl zum Abstellen der elektronischen Steuerung eines elektronischen Schalters oder der elektronischen Schalter (IS1, IS2), der oder die ein Sicherheitsorgan oder die Sicherheitsorgane (RS, V) versorgen, zu senden.

7. Elektronische Steuerungsvorrichtung nach einem der Ansprüche 1 bis 6, **dadurch gekennzeichnet, dass** die Betriebsmikrosteuereinheit (MF) dazu geeignet ist, der Sicherheitsmikrosteuereinheit (MS) über die Kommunikationsverbindung (L) einen Befehl zum Verriegeln einer Sperre des elektrischen Haushaltsgeräts am Anfangs eines Betriebszyklus zu senden.

8. Elektronische Steuerungsvorrichtung nach einem der Ansprüche 1 bis 7, **dadurch gekennzeichnet, dass** die Betriebsmikrosteuereinheit (MF) dazu geeignet ist, der Sicherheitsmikrosteuereinheit (MS) über die Kommunikationsverbindung (L) einen Befehl zum Ändern des Zustands eines Sicherheitsrelais (RS) zu senden, wenn der durch den Sicherheitsrelais fließende Strom gleich Null ist.

9. Elektrisches Haushaltsgerät, **dadurch gekennzeichnet, dass** es eine elektronische Steuerungsvorrichtung nach einem der Ansprüche 1 bis 8 umfasst.
